# EUROPÄISCHE PATENTSCHRIFT

(11) **EP 1 749 065 B1**
(45) Veröffentlichungstag und Bekanntmachung des Hinweises auf die Patenterteilung: **29.10.2008**
(21) Anmeldenummer: 05753650.0
(22) Anmeldetag: 13.05.2005
(51) Int. Cl.: C09D 1/00

(54) **MINERALISCHES SCHICHTSILIKAT ENTHALTEND ILLIT ALS HAUPTKOMPONENTE IN FORM VON NANOPOWDER UND VERFAHREN ZUR MECHANISCHEN KONDITIONIERUNG DESSELBEN**
MINERAL LAYERED SILICATE IN THE FORM OF A NANOPOWDER
PHYLLOSILICATE MINERAL SOUS FORME DE NANOPOUDRE

(30) Priorität: 14.05.2004 DE 102004023992
(43) Veröffentlichungstag der Anmeldung: 07.02.2007
(73) Patentinhaber: Nottenkämper, Hans Günter, 46244 Bottrop (DE)
(72) Erfinder: SCHUHBAUER, Matthias, 94327 Bogen (DE)
(74) Vertreter: Wasmeier, Alfons
(86) Internationale Anmeldenummer: PCT/DE2005/000883
(87) Internationale Veröffentlichungsnummer: WO 2005/111154

(56) Entgegenhaltungen:
- EP-A1- 0 850 690
- DE-A1- 2 950 248
- JP-A- 58 079 810
- US-A- 3 041 238
- US-A- 3 951 850

## Beschreibung

Die Erfindung betrifft das Konditionieren von natürlich vorkommenden Schichtsilikaten, insbesondere in Form von illitischen Rohstoffen mit einem Illitanteil von mehr als 70% und ausgeprägten Feinanteilen.

Schichtsilikate haben eine Partikelfeinheit im Bereich < 2 µm (dieser Wert ist für die Kornfeinheit von Tonmineralen charakteristisch), wobei die tatsächlichen Partikelfeinheiten abhängig von der Ausprägung der Partikel in deutlichere Feinbereiche bis zur Nanoscaligkeit reichen können.

Bei Schichtsilikaten mit technisch interessanten Plättchenstrukturen wird allgemein zwischen Zweischicht- (Kaolinit) und Dreischicht-Silikaten (Smectit, Illit) unterschieden. Insbesondere die Dreischicht-Silikate bieten ausgeprägte Partikelfeinheiten. Dabei werden allgemein die Typen der Smectitgruppe technisch und kommerziell genutzt. Für diese Gruppe existieren relativ hohe Lagerstättenvorkommen mit ausreichender Reinheit und mit gut ausgebildeter Feinheit. Die typische Quellfähigkeit dieser speziellen Silikatstruktur wird für die Desagglomeration, d.h. die Trennung der einzelnen Teilchen voneinander, mit Hilfe chemischer Verfahren genutzt.

Die illitgruppe umfasst im wesentlichen die technisch und kommerziell genutzten Typen des Muskovit und Glimmer. Deren gesteinsartige Ausprägung erfordert einen regelrechten Zerkleinerungsprozess, zumal sie nicht die plastische Charakterstik tonmineralischer Materialien wie Kaolinit und Smectit besitzen.

Eine Herstellung nanoscaliger Partikel ist aufgrund der geringeren Ausprägung (bedingt durch den Verwitterungsprozess bei der Entstehung) zwar theoretisch möglich, praktisch jedoch unter kommerziellen und industriellen Gesichtspunkten in Hinblick auf den verfahrenstechnischen Aufwand zur Herstellung ausreichend großer Produktionsmengen und des hohen Grades chemischer Beeinflussung eher nicht umsetzbar. Die Nanoscaligkeit beschränkt sich zudem auf die Dicke der Plättchen, während die Fläche mi-kroskopisch bleibt. Muskovit und Glimmer werden bei mineralogischer Betrachtung makroskopisch eingeordnet. Muskovit und Glimmer der Illitgruppe sind in der Regel direkte Verwitterungsprodukte des Ausgangsgesteins. Im Gegensatz hierzu werden die eigentlichen Tone in Sekundärlagerstätten umgelagert. Bei dieser Umlagerung bilden sich durch mechanische, hydrothermale und chemische Prozesse erst die feinen Tonsedimente heraus, die die Voraussetzung für nanoscalige Partikel bilden.

Entsprechend der vorliegenden Partikelfeinheit dieser Tone sind die Dreischicht-Minerale, wie Smectit und illit deutlich feiner als die Zweischicht-Minerale, z.B. Kaolinit. Die Praxis konzentriert sich hinsichtlich nanoscaliger Tonminerale somit auf smectitische Rohstoffe, da diese in mengenmäßig verwertbaren Lagerstätten mit ausreichenden Reinheitsgraden vorliegen. Entsprechend fein ausgebildeter Illit mit höheren Reinheitsgraden kommt hingegen praktisch nicht oder nur in sehr eingeschränktem Umfang vor. Die allgemeine Literatur zu Tonmineralen konzentriert sich somit hinsichtlich der industriellen Nutzung, insbesondere im hochtechnischen Bereich und bezüglich nanoscaliger Produkte, auf smectitisches Material.

Zum Stand der Technik wird auf DE 100 61 232 A1 verwiesen, die ein Verfahren zur Gewinnung und Aufbereitung von Laist für medizinische Anwendungen, insbesondere zur Behandlung von Hautkrankheiten betrifft. Hierbei handelt es sich um die spezielle Nutzung eines bestimmten Mineralstoffgemisches, das tonmineralische Anteile enthält, die illitischer Ausprägung sein können, wobei die tonmineralischen Komponenten zufällig Illit sind, jedoch nicht in konzentrierter Form. Entscheidend ist hierbei eine tonige Komponente, die als plastische Matrix dient und die nicht desagglomeriert sein muss. Der Laist stellt ein absolut hydrogenes Mineralgemisch mit einer Vielzahl von Komponenten dar, wobei Ton als begriffsbestimmtes Material bis mehr als 60% Sand haben kann. Es handelt sich hier um einen völlig anderen Rohstoff mit grundsätzlich anderen Eigenschaften und Zielrichtungen für den Einsatz, dessen Salzanteile mit einem Schichtsilikat nichts gemeinsam haben. Des weiteren liegt ein gravierender Unterschied in der Verfahrenstechnik mit Nassaufbereitung. Der Zustand des aufbereiteten Produkts als Paste stellt einen weiteren grundsätzlichen Unterschied zu einem Nanopulver dar.

DE 29 50 248 C2 betrifft die Herstellung von mehrkomponentigen Massen mit dem Ziel einer Homogenisierung mehrerer Komponenten zu einer einsatzfähigen Masse. Diese Zielsetzung ist mit der nach vorliegender Erfindung nicht vergleichbar, da im Falle der Erfindung mit einer einzigen, möglichst reinen Komponente gearbeitet wird, die hochfein in ihre Primärbestandteile zerlegt werden soll. Das Produkt nach diesem bekannten Vorschlag wird stark befeuchtet, damit eine spezielle Verarbeitungstechnik angewendet werden kann. Diese Verarbeitungstechnik benutzt bekannte Maschinen und Einrichtungen wie z.B. Prallmühle und Sichter. Die Mahlfeinheit wird dabei mit 90 µm angegeben und der Mahlvorgang läuft im Sinne eines Zerkleinerungsvorganges ab.

Aus JP 58079810 (JP Abstract) ergibt sich ein Verfahren zum Zerkleinern von Bentonit, bei dem das Rohbentonit als mineralisches Mineral, hauptsächlich Montmorillonit, zunächst vorgebrochen und dann pulverisiert wird. Hierbei werden Bentonitteilchen erhalten, von denen mehr als 70% einem Teilchendurchmesser von kleiner/ gleich 2 µm besitzen. Der Grad der Reinheit des dabei verwendeten Rohmaterials wie auch die genaue Partikelverteilung, ferner auch eine Rückführung der unvollständig desagglomerierten Teilchen lässt sich hieraus nicht entnehmen, ebenso wenig, wie weit das Kristallgefüge des Ausgangsmaterials erhalten bleibt.

US 3,041, 238 A beschreibt ein Verfahren zum Reinigen und Aktivieren von Tonen zur Verwendung in therapeutischen Zusammensetzungen, bei dem das Rohmaterial mechanisch grob vorgebrochen, dann kalziniert und schließlich erneut fein gemahlen wird. Das Vorbrechen wird im Kreislauf ausgeführt, so dass die groben Partikel wieder in den Vorbrecher zurückgeführt werden.

Aus EP 0 850 690 A ist ein Verfahren zur Herstellung eines Toners unter Verwendung einer pneumatischen Prallmühle bekannt. Die in dieser Prallmühle erzeugten Partikeldurchmesser liegen zwischen 3 und 15 µm.

US 3,951,850 A offenbart ein Verfahren zur Erzeugung kollodialer Tonpartikel, bei dem der Ton zunächst aufgeschwemmt und dann einer Dampfprallmühle zugeführt wird. Die erhaltenen Teilchen haben einen Durchmesser von weniger als 500 nm.

US 2002/45010 A1 betrifft eine spezielle, konzentriert auf ein synthetisches Material ausgerichtete Anwendung, speziell die Beschichtung von Oberflächen. Das Grundmaterial hat nur sehr weitläufig Beziehung zu Illit. Die Materialbasis ist Hectorit als tonmineralisches Material und die Beschreibung weist auf die Verfügbarkeit von nanofähigen Materialien hin, so dass damit logischerweise auch lllit erwähnt wird, der in der Praxis keine entsprechende Anwendung findet. Das Material Hectorit ist einer anderen Gruppe, nämlich der Gruppe der Smectite, zuzuordnen. Hierbei handelt es sich um ein synthetisch hergestelltes Material, das auch vom Chemismus her speziell auf den Austausch von Mg gegen Li ausgerichtet ist, also keinen Bezug zu einem rein natürlichen Material hat.

Die EP 1 394 197 A1 betrifft hochviskose, für den Extrusions-Blasformprozess geeignete Formmassen auf Basis von thermoplastischen Polymeren aus der Gruppe bestehend aus Polyamiden, Polyestern, Polyetherestern, Polyesteramiden oder deren Gemischen und nanosskaligen Füllstoffen, d.h. Füllstoffen mit einer mittleren Teilchengröße im Bereich von < 1 µm. Die zu lösende Aufgabe besteht darin, hochviskose Formmassen auf Basis von thermoplastischen Polymeren zur Verfügung zu stellen, die leicht herstellbar sind, sich für den Extrusionsblasformprozess eignen und zusätzlich bei Temperaturenvon 150 - 200° C noch eine genügende Festigkeit besitzen. Diese Aufgabe wird durch hochviskose Formmassen auf Basis von thermoplastischen Polymeren gelöst, welche (a) nanoskalige Füllstoffe in einer Menge von 0,5 - 15 Gewichtsprozent sowie (b) faserförmige Füllmaterialien in Mengen von 5 - 30 Gewichtsprozent enthalten. Die Füllstoffpartikel haben dabei Dimensionen im Nanometerbereich, d.h. mit einer mittleren Teilchengröße von < 1 µm (unbehandelte Füllstoffe). Als nanoskalige Füllstoffe zur Herstellung der Nanokomposite eignen sich solche Stoffe, die in jeder beliebigen Stufe der Herstellung zugegeben werden können und dabei im Nanometerbereich fein verteilbar sind. Diese nanoskaligen Füllstoffe können oberflächenbehandelt, aber auch unbehandelte Füllstoffe sein. Die Füllstoffe sind bevorzugt Mineralien, die bereits eine Schichtstruktur aufweisen, wie Schichtsilikate, Doppelhydroxide oder auch Graphit. Die hierbei Verwendung findenden nanoskaligen Füllstoffe sind aus der Gruppe der Oxide, Oxidhydrate von Metallen oder Halbmetallen ausgewählt, insbesondere aus der Gruppe der Oxide oder Oxidhydrate eines Elementes ausgewählt aus der Gruppe aus Bor, Aluminium, Kalzium, Gallium, Indium, Silizium, Germanium, Zinn, Titan, Zirkonium, Zink, Yttrium oder Eisen. Des weiteren sind die nanoskaligen Füllstoffe entweder Siliziumdioxid oder Siliziumdioxid-Hydrate. In der Polyamidformmasse liegende nanoskaligen Füllstoffe in einer Ausführungsform als ein gleichmäßig dispergiertes schichtförmiges Material vor. Als bevorzugte Mineralien mit Schichtstruktur sind Schichtsilikate, Doppelhydroxide, wie Hydrotalcit oder Graphit angegeben, ebenso Nanofüllstoffe auf Basis von Silikonen, Silicia oder Silsesquioxanen.

Aus dieser Patentschrift entnimmt der Fachmann, dass grundsätzlich alle Schichtsilikate in Frage kommen, aber verfahrenstechnisch nur synthetische bzw. synthetisierte Materialien und die quellfähigen Smectite eingesetzt werden bzw. entsprechend nanoscalig hergestellt werden. Dabei wird deutlich auf die Notwendigkeit chemischer Zusätze zum Erreichen einer Exfolierung im späteren Verarbeitungsprozess hingewiesen. Hieraus ergibt sich die grundlegende Abgrenzung gegenüber vorliegender Erfindung hinsichtlich Ausgangsmaterial, Verfahrenstechnik und Eigenschaften.

Weiter wird in dieserPatentschrift wiederholt die Nanoscaligkeit in einem Größenbereich von durchschnittlich <1 µm angegeben. Das Material nach der Erfindung wird mit überdurchschnittlich <300 mm (0,3 µm) bzw. mit D50 < 150 nm (0,15 µm) spezifiziert. D.h. das erfindungsgemäße Material hebt sich bezüglich der Nanoscaligkeit vom Stand der Technik bezüglich natürlicher mineralischer Schichtsilikate um beinahe eine ganze Zehnerpotenz ab.

Für den Anmelder und Erfinder vorliegender Anmeldung ergab sich aufgrund entsprechender Vorarbeiten, dass ein gesuchtes mineralisches Material mit Schichtstruktur im wesentlichen folgende Vorgaben und Eigenschaften erfüllen musste:
a) die Eignung zur Herstellung eines Nanoproduktes,
b) die Erzielung eines Endproduktes auf der Basis eines natürlichen Rohstoffes,
c) die Eigenschaft eines Schichtsilikats mit dreischichtigem Aufbau, das vorrangig keine oder allenfalls eine geringe Quellfähigkeit besitzt,
d) eine vollständige Desagglomerierbarkeit bei der Produktherstellung,
e) die Verarbeitbarkeit und Konditionierung ohne thermische Vorbehandlung,
f) die Verarbeitung ohne den Einsatz von chemischen oder synthetischen Prozessen.

Bei der Suche nach und Versuchen mit geeigenten Schichtsilikaten in Hinblick auf Nanoscaligkeit sind Anmelder und Erfinder auf eine Lagerstätte mit ungewöhnlich reinem und extrem fein ausgebildetem Illit (nachstehend als "Illit der ausgewählten Art" bezeichnet) gestoßen, der die vorstehend genannten Zielsetzungen bzw. Eigenschaften des gesuchten Materials in hohem Maße besitzt und die Möglichkeit bietet, das Material durch Verarbeitungs- und Konditionierschritte gemäß der Erfindung direkt in ein Nanopowder umzuformen. Die Rohstoffcharakteristik dieses als geeignet gefundenen Materials ist maßgeblich bestimmt durch einen Schichtsilikatanteil, der eine extrem feine Ausprägung in Richtung < 300 nm, einen vollständig ausgeprägten Illitanteil von >70% und das nahezu vollständige Fehlen von groben Hartstoffen zeigt. Diese Konditionierung erfolgt gemäß der Erfindung auf rein mechanischem Wege, trocken und ohne thermische Vorbehandlung, ohne Mahlung im Sinne von Zerstörung kristalliner Strukturen, ökonomisch im industriellen Umfang und mit bestehender, speziell ausgewählter Technologie. Dabei konnte erreicht werden, dass mit dem Illit der ausgeprägten Art ohne Trocknung und ohne Zerkleinerung ein rieselfähiges, feinpulveriges Produkt unter Beibehaltung der vollen Plastizität durch Vermeidung von Kristallwasserverlust und Zerstörung der Plättchenstruktur, entgegen allen Erwartungen und bisherigen Erkenntnissen, unter Einsatz konventioneller Technik die für ein Nanoprodukt erforderliche Produktfeinheit erzielt wurde. Im Gegensatz hierzu ist das Erreichen entsprechender Feinheiten in den Nanobereich < 300 nm bisher nur durch Nassverfahren oder intensive Mahlung (im Sinne von Zerstörung kristalliner Strukturen (wie z.B. Glimmer) und unter Einsatz erheblicher Mengen chemischer Zusätze möglich. Dies bedingt einen besonders hohen technischen und wirtschaftlichen Aufwand für eine industrielle Produktion. Da bei herkömmlichen, vergleichbaren Verfahren der Einsatz von Chemikalien praktisch nicht vermeidbar ist, ist die zielorientierte Anpassung der Teilchen für den weiteren Verarbeitungsvorgang beim Kunden beschränkt und aus ökologischen Gesichtspunkten negativ.

Illit zeichnet sich durch seine besondere Partikelfeinheit bis in den kolloidalen Bereich als für die Produktzielsetzung nach der Erfindung besonders geeignetes Rohmaterial aus. Da Illit in der Regel jedoch nicht vollständig zum kolloidalen Schichtsilikat ausgeprägt ist und üblicherweise auch keine hohe Reinheit besitzt, ist die Zielsetzung so bisher nicht aufgestellt und auch nicht umgesetzt worden.

Bekannte Nanoscale-Clays basieren in der Regel auf smectitischem Material, wie z.B. Montmorillonit und Bentonit. Ein derartiges Material wird unter thermischer Vorbehandlung aufbereitet, was die Elastizität der Plättchenstrukturen durch Kristallwasserverluste zur Folge hat. Dies ist insbesondere für einen sensiblen Einsatz im Bereich der technischen Keramik, aber auch für die Quellfähigkeit von Nachteil. Dabei wird keine bzw. keine vollständige Desagglomeration erreicht, sondern unter Zuhilfenahme wesentlicher chemischer Zusätze und unter Ausnutzung der Quellfähigkeit ein "Exfolieren" im Prozess des Anwenders erforderlich, d.h., dass der Einsatzerfolg auf Seiten des Kunden liegt und spezielle Verfahrenstechniken und zusätzliche Energie benötigt werden.

Für das Aufbereitungs-, Konditionierungs- und Produktionsverfahren nach der Erfindung ist eine Desagglomeration der zusammengeballten Schichtsilikatteilchen von entscheidender Bedeutung, wobei sowohl in chemischer als in mineralogischer Hinsicht die ursprüngliche Zusammensetzung des Materials erhalten bleiben muss, vorrangig das Verfahren trocken durchgeführt wird, wobei grundsätzlich ein Nassverfahren nicht ausgeschlossen werden soll, die Schichtsilikatteilchen nicht zerkleinert werden (im Sinne einer Zerstörung), durch die Desagglomeration der Schichtsilikatkristallite kein wesentlicher Einfluss auf Form und Struktur des Materials genommen wird, chemische und thermische Behandlungen unterbleiben und kein Zugeben oder Abführen von Stoffen zu und von dem Material erfolgt.

Das Ausgangsprodukt des illitischen Rohstoffes der ausgewählten Art wird in einer Desagglomerationseinrichtung mechanisch "vorgebrochen" (unter Beibehaltung seiner mineralischen Struktur) aufgegeben. Zur Durchführung der Desagglomeration werden die Grobagglomerate stark beschleunigt und mit großen Luftmassen verwirbelt. Die Agglomerate werden beim Zusammentreffen untereinander und beim Auftreffen auf Prallflächen unter Prallwirkung so weit voneinander gelöst, dass im wesentlichen Primärkristallite vorliegen, wobei durch Konditionieren das Produkt desagglomeriert und die überwiegende Menge an Primärteilchen etwa <300 nm beträgt. Bei einer nachgeschalteten Feinsichtung werden die desagglomerierten Schichtsilikatteilchen als das gewünschte Produkt abgezogen, damit eine Beschädigung dieser Kristallite vermieden wird. Die nicht vollständig desagglomerierten Teilchen werden als Grobgut wieder in den Desagglomerationsprozess zurückgeführt. Anschließend wird durch das gezielte Ausbringen des Feinproduktes der Desagglomerationsgrad erhöht. Dies lässt sich durch verschiedenartige Einbauten in den Desagglomerationsaggregaten optimieren, um eine höhere Verweildauer oder eine höhere Prallwirkung zu erzielen.

Zur Durchführung des erfindungsgemäßen Verfahrens wird mit Hilfe herkömmlicher Maschinen, z.B. Walzenbrecher, das Ausgangsmaterial vorgebrochen. Zur Feinsichtung werden Hochleistungswindsichter mit speziellen, an dieses Material angepassten Sichterrädern eingesetzt. Für den Desagglomerationsprozess werden Aufbereitungsmaschinen verwendet, die eine Prallwirkung auf die Agglomerate ausüben. Derartige Aufbereitungsmaschinen können Prallmühlen, Luftstrahlmühlen, Stiftmühlen oder Kugelmühlen sein. Es hat sich jedoch der Einsatz spezieller Planscheibenmühlen, z.B. Tonaufschlussmühlen nach dem System Eirich, mit gezahnten Mahlbahnen in bezug auf Leistung und Ergebnis als besonders vorteilhaft herausgestellt. Die Vielzahl der Zwischenräume zwischen der Mahlbahnriffelung bilden dabei feine Kammern zur Verwirbelung bei den vorherrschenden hohen Drehzahlen und ergeben - bezogen auf das spezielle Aufgabegut - eine hohe Prallwirkung. Die Prallwirkung und die Verweildauer lassen sich durch unterschiedliche mechanische Einbauten weiter verbessern.

Die hierbei erzielten Ergebnisse in bezug auf die Produktfeinheit haben die Zielsetzung, den Nanobereich zu erreichen, erfüllt. Entgegen allen Erwartungen und bisherigen Erkenntnissen war dies mit für die Fachwelt höchst überraschenden Ergebnissen praktisch mit konventioneller Technik erreichbar.

Mit Hilfe von Gegenstrahlmühlen wurden entgegen den Erwartungen Feinheiten bis zu < 150 nm erreicht. Dabei wird zur entsprechenden Feinausbeute üblicherweise im Kreislauf über Sichter gefahren. Das Ergebnis war eine praktisch rückstandsfreie Ausbeute. Die Analytik über Elektronenmikroskop zeigte eine gute und ungestörte Plättchenstruktur und bestätigt die Nanaoscaligkeit. Die Produktionsmengen pro Zeiteinheit waren dabei jedoch beschränkt und kostenintensiv.

Aufgrund von gezielt durchgeführten Entwicklungsversuchen hat sich ergeben, dass auf mechanischem Weg mit wesentlich leistungsfähigeren Maschinen, die ebenfalls nach dem Prallprinzip eingesetzt werden können, hohe Konzentrationen entsprechend feiner Partikel zu erreichen sind und die gröberen Teilchen weitestgehend Restagglomerate darstellen. Überraschenderweise funktioniert das Prallprinzip ausgezeichnet und mit den höchsten Feinpartikelkonzentrationen in der Planscheibenmühle. Hier desagglomerieren die stabilen, leistenförmigen Agglomerate des speziellen illits der ausgewählten Art besonders gut. Die gerollten Formen der Smectite bringen hierbei nicht die Voraussetzungen mit. In Anlehnung an die Verfahrensweise der Gegenstrahlmühle mit den entsprechenden technischen Erfahrungen bei Einsatz des speziellen Illits der ausgewählten Art ergab sich die Möglichkeit der Abrichtung der Feinstanteile und ein Wiedereinführen der Restagglomerate in den Kreislauf. Die hohen Feinanteile ermöglichen dabei eine praktisch umsetzbare Produktion.

Mit dem erfindungsgemäßen Verfahren und unter Verwendung des Illits der ausgewählten Art lässt sich ein absolutes Nanopowder als direktes Produkt herstellen. Ein solches, auf völlig unübliche Weise hergestelltes, Nanopowder auf der Grundlage des Illits der ausgewählten Art ist bereits im Produktzustand entsprechend nanoscalig des-agglomeriert, so dass es besonders gut und mit hohen Anteilen z.B. in Polymersystemen dispergiert werden kann. Die praktischen Erfahrungen zeigen dabei, dass der Verfahrensaufwand deutlich geringer ist und erheblich bessere Eigenschaftswerte (im Vergleich zu Nanoclays) erzielt werden. Zusätzlich ist es möglich, auf belastende Chemie zu verzichten und die Oberflächenaktivität der Illitpartikel systemrelevant zu nutzen.

Demgegenüber wird bei den Nanoclays die typische Quellfähigkeit der Smectite benutzt, um sie chemisch aufzuweiten und ein Exfolieren im Prozess des weiter verarbeitenden Kunden vorzunehmen. Damit haben die nicht quellfähigen Illite der ausgewählten Art jedoch den Vorteil, dass sie keine entsprechende Volumenänderungen bei entsprechenden Spannungen erfahren, was insbsondere in der Keramik ein entscheidender Vorteil ist.

Das nach der Erfindung hergestellte Produkt zeichnet sich dadurch aus, dass es ein rein mineralisches, natürliches, fein konditioniertes Schichtsilikat darstellt, einen dreischichtigen Kristallaufbau hat, im wesentlichen nicht quellfähig ist, als Hauptkomponente das Mineral Illit mit einem Anteil von mehr als 70% enthält, wobei die Restanteile ausgeprägte Feinanteile sind, einen festen pulverfömigen Aggregatzustand und einen Partikeldurchmesser von < 300 nm hat und in bezug auf Ionenaustausch und Ladung reaktionsfähig ist.

Des weiteren hat dieses mit der Erfindung erzielte Material für den Einsatz in der Praxis wesentliche immanente Eigenschaften der Schutt- und Rieselfähigkeit ohne Staubentwickung, weitgehend fehlende Reagglomerationsneigung und fehlende hygroskopische Neigung, hohe Benetzungsfähigkeit, ist somit homogenisierfähig und gefahrlos betriebstauglich.

Nachstehend wird ein Beispiel für eine durchschnittliche chemische Zusammensetzung des erfindungsgemässen illits der ausgewählten Art gegeben, wobei die Anteile in Gewichsprozent angegeben sind:
- SiO₂ 46,00
- Al₂O₃ 20,00
- Fe2O₃ 7,00
- CaO 6,00
- K₂O 5,50
- MgO 3,00
- Na₂O 0,15
- TiO₂ 0,80
- P2O₅ 0,30
- GV 11,00

Die Strukturformel dieser Zusammensetzung lautet:
(K, H₃O) (Al, Mg, Fe)₂(Si, Al)₄O₁₀[(OH)2(H₂O)]

## Patentansprüche

1. Verfahren zum mechanischen Konditionieren eines hochreinen, natürlichen, mineralischen Schichtsilikats, mit der Hauptkomponente Illit der ausgewählten Art mit höherem Anteil von 70% unter Ausschluss thermischer Vorbehandlung, Zerstörung kristalliner Strukturen und/oder chemischer bzw. synthetischer Prozesse, auf eine im Nano-Bereich liegende Feinheit von 100 - 600 nm, bei dem die mechanische Konditionierung in der Weise durchgeführt wird, dass
a) das Material der ausgewählten Art als mineralisches Produkt höchster Reinheit, unter Beibehaltung der ursprünglichen, natürlichen Zusammensetzung in chemischer und mineralogischer Hinsicht, mechanisch vorgebrochen wird,
b) die zusammengeballten Schichtsilikatteilchen einer Desagglomeration unterzogen werden, indem die Grobagglomerate einer hohen Beschleunigung ausgesetzt und mit Hilfe erheblicher Luftmassen verwirbelt werden,
c) die Agglomerate durch Prallwirkung aufeinander zu und gegen Aufprallflächen gerichtet und dabei bis zum Vorliegen der Primärkristallite mit einem Feinheitsgrad von < etwa 300 nm aufgelöst werden,
d) durch nachgeschaltete Feinsichtung die desagglomerierten Schichtsilikatteilchen abgezogen, werden, und
e) die unvollständig desagglomerierten Teilchen in den Desagglomerationsvorgang wieder eingeführt und die desagglomerierten Primärkristalle abgezogen werden, und zur Konditionierung die natürliche Zusammensetzung des Produktes in chemischer und mineralogischer Hinsicht beibehalten wird, die Schichtsilikatteilchen keiner das Kristallgefüge zerstörenden Zerkleinerung ausgesetzt werden, und die Schichtsilikatkristalle in bezug auf ihre Form und Struktur unbeeinflusst bleiben.

2. Verfahren nach Anspruch 1, **dadurch gekennzeichnet, dass** das "Vorbrechen" mit Hilfe konventioneller maschineller Einrichtungen, z.B. Walzenbrecher, erfolgt, die Feinsichtung mittels Hochleistungswindsichtern mit speziellen Sichterrädern vorgenommen wird, und/oder die Desagglomeration mit Hilfe von an sich bekannten Aufbereitungsmaschinen durchgeführt wird, mit denen eine Prallwirkung auf die Agglomerate ausgeübt wird.

3. Verfahren nach einem der Ansprüche 1 oder 2, **dadurch gekennzeichnet, dass** der Desagglomerationsgrad durch den gezielten Austrag des Feinproduktes erhöht wird, vorzugsweise dadurch, dass in den Desagglomerationsaggregaten Vorkehrungen getroffen werden, um eine höhere Verweildauer und/oder eine höhere Prallwirkung zu erzielen.

4. Verfahren nach Anspruch 1, **dadurch gekennzeichnet, dass** zur Konditionierung die natürliche Zusammensetzung des Produktes in chemischer und mineralogischer Hinsicht beibehalten wird, dass die Schichtsilikatteilchen keiner das Kristallgefüge zerstörenden Zerkleinerung ausgesetzt werden, dass die Schichtsilikatkristallite in Bezug auf ihre Form und Struktur unbeeinflusst bleiben, und dass das Material keiner chemischen Behandlung oder thermischen Vorbehandlung ausgesetzt wird.

5. Verfahren nach einem der Ansprüche 1 - 4, **dadurch gekennzeichnet, dass** zur Desagglomeration des Materials Aufbereitungsmaschinen in Form von Planscheibenmühlen mit gezahnten Mahlbahnen eingesetzt werden, dass die Zwischenräume zwischen der Mahlbahnriffelung als feine Kammern zur Verwirbelung bei hohen Drehzahlen und bei hoher Prallwirkung ausgebildet werden, und dass das "Vorbrechen" mit Hilfe von Walzenbrechern und die Feinsichtung mit Hochleistungs-Windsichtern erfolgt.

6. Mineralisches Produkt zur Verwendung als aktiver Füllstoff, z. B. in der Polymerindustrie oder in der keramischen Industrie, hergestellt nach einem Verfahren nach Anspruch 1; **gekennzeichnet durch** die Kombination folgender
Eigenschaften:
a) mineralisches Produkt aus Aluminiumschichtsitikat der ausgewählten Art,
b) dreischichtiger Kristallaufbau, ohne Manipulation seiner Basisstruktur,
c) Hauptkomponente Mineral illit der ausgewählten Art mit höherem Anteil als 70%,
d) fester bzw. pulverförmiger Aggregatzustand,
e) D₉₅ < 3000 nm,
f) D₅₀ < 500 nm,
g) Reaktionsfähigkeit bezüglich Ionenaustausch,
h) schütt- und rieselfähig ohne wesentliche Staubentwicklung,
i) fehlende ausgeprägte Reagglomerationsneigung ,
j) Benetzungsfähigkeit gegenüber Wasser,
k) praktikable Homogenisierungsfähigkeit und gefahrlose Betriebstauglichkeit.
l) keine hygroskopische Neigung.

7. Verwendung eines hochreinen, natürlichen, mineralischen Schichtsilikats mit einem Anteil von mehr als 70% natürlichen illits der ausgewählten Art, mit einem Rest Feinanteile, konditioniert nach dem Verfahren nach Anspruch 1, als Nanopulver mit folgenden Eigenschaften:
a) es ist als mineralisches Produkt höchster Reinheit unter Beibehaltung der ursprünglichen, natürlichen Zusammensetzung in chemischer und mineralogischer Hinsicht, mechanisch "vorgebrochen",
b) die zusammengeballten Schichtsilikatteilchen sind aufgrund einer hohen Beschleunigung der Grobagglomerate und Verwirbelung mittels hoher Luftmassen desagglomeriert,
c) die Agglomerate sind durch mechanische Prallwirkung aufeinander und gegen Aufprallflächen bis zur Erzielung der Primärkristallite mit einem Feinheitsgrad von < etwa 300 nm aufgelöst,
d) die desagglomerierten Schichtsilikatteilchen sind durch nachgeschaltete Feinsichtung abgezogen,
e) zur Konditionierung ist die natürliche Zusammensetzung des Produktes in chemischer und mineralogischer Hinsicht beibehalten,
f) das Kristallgefüge der Schicht-Silikatteilchen ist aufrecht erhalten und in Bezug auf ihre Form und Struktur unbeeinflusst, und
g) das Material ist ohne chemische oder thermische Verfahrensbehandlung ausschließlich durch mechanische Konditionierung vorgenommen.

8. Verwendung eines hochreinen, natürlichen, mineralischen Schichtsilikats mit einem Anteil von mehr als 70% natürlichen illits der ausgewählten Art, mit einem Rest Feinanteile, konditioniert nach dem Verfahren nach Anspruch 1 als Nanopulver in der Polymerindustrie.

9. Verwendung eines hochreinen, natürlichen, mineralischen Schichtsilikats mit einem Anteil von mehr als 70% natürlichen Illits der ausgewählten Art, mit einem Rest Feinanteile, konditioniert nach dem Verfahren nach Anspruch 1, als NanoFüllmaterial im Bereich von Oberflächensystemen, wie z.B. keramischen Glasuren, Lacken, Beschichtungen usw.

10. Verwendung eines hochreinen, natürlichen, mineralischen Schichtsilikats mit einem Anteil von mehr als 70% natürlichen Illits der ausgewählten Art, mit einem Rest Feinanteile, konditioniert nach dem Verfahren nach Anspruch 1, als reaktives Nanoprodukt für Keramik und zur Ausbildung nanostrukturierten keramischen Scherbenaufbaues.

## Claims

1. Method for mechanically conditioning an ultra-pure natural mineral layered silicate with the main component illite of the selected type having a higher proportion of 70%, without a thermal pre-treatment, destruction of crystalline structures and/or chemical or synthetic processes, to a fineness lying in the nano range of 100 - 600 nm, in which the mechanical conditioning is carried out in that
a) the material of the selected type as a mineral product of the highest purity, is mechanically pre-broken whilst retaining the original, natural composition in the chemical and mineralogical respects,
b) the conglomerated layered silicate particles are subjected to disagglomeration by exposing the coarse agglomerate to a high acceleration and fluidising them by means of considerable air masses
c) the agglomerate is directed through impact action with each other to and against impact faces and is thereby broken up until the presence of the primary crystallite with a degree of fineness of < about 300 nm
d) the disagglomerated layered silicate particles are removed through subsequent fine sifting, and
e) the incompletely disagglomerated particles are returned to the disagglomeration process and the disagglomerated primary crystals are removed and for conditioning the natural composition of the product as regards the chemical and mineralogical respect is retained, the layered silicate particles are subjected to no pulverisation which destroys the crystal structure, and the layered silicate crystals remain unaffected in respect of their shape and structure.

2. Method according to claim 1 **characterised in that** the "pre breaking" takes place by means of conventional mechanical devices, such as roller crushers, the fine sifting is undertaken by means of high performance wind sifters with special sifting wheels, and/or the disagglomeration is carried out by means of processing machines known per se, with which an impact action is exerted on the agglomerate.

3. Method according to one of claims 1 or 2 **characterised in that** the degree of disagglomeration is increased through the deliberate discharge of the fine product, preferably **in that** measures are taken in the disagglomeration assembly units to obtain a higher dwell time and/or a higher impact action.

4. Method according to claim 1 **characterised in that** for conditioning the natural composition of the product is retained as regards the chemical and mineralogical respect, that the layered silicate particles are subjected to no pulverisation which destroys the crystal structure, that the layered silicate crystallites remain unaffected as regards their shape and structure, and that the material is exposed to no chemical treatment or thermal pre-processing.

5. Method according to one of claims 1 to 4 **characterised in that** for the disagglomeration of the material, processing machines in the form of disc grinders with cogged grinding tracks are used, that the interspaces in the grinding path corrugations are formed as fine chambers for creating the swirl at high speeds and with high impact action, and that the "pre-breaking" takes place with the aid of roller crushers and the fine-sifting takes place with high performance wind sifters.

6. Mineral product for use as active filler, e.g. in the polymer industry or in the ceramic industry, manufactured according to a method according to claim 1, **characterised by** the combination of the following properties:
a) mineral product of aluminium layered silicate of the selected type,
b) triple-layered crystal structure, without manipulation of its basic structure
c) main component mineral illite of the selected type with a higher proportion than 70%
d) solid or powdered aggregate state
e) D₉₅ < 3000 nm
f) D₅₀ < 500 nm
g) capable of reaction as regards ion exchange
h) capable of free-flowing without significant dust occurring
i) distinct lack of reagglomeration tendency
j) capacity for wetting compared to water
k) viable homogenisation capacity and risk-free operating performance
l) no hygroscopic tendency.

7. Use of an ultra-pure natural mineral layered silicate with a proportion of more than 70% natural illite of the selected type, with a residue of fine particles, conditioned according to the method according to claim 1, as nano powder with the following properties:
a) it is mechanically "pre-broken" as mineral product of the highest purity whilst retaining the original natural composition as regards the chemical and mineralogical respect
b) the conglomerated layered silicate parts are disagglomerated as a result of high acceleration of the coarse agglomerates and fluidisation by means of high air masses
c) the agglomerates are broken up through mechanical impact action on each other and against impact faces until obtaining the primary crystallite with a degree of fineness of < about 300 nm
d) the disagglomerated layered silicate particles are removed through subsequent fine sifting
e) for conditioning, the natural composition of the product is retained as regards the chemical and mineralogical respect
f) the crystal structure of the layered silicate particles is maintained and is unaffected as regards its shape and structure, and
g) the material is treated solely through mechanical conditioning and without chemical or thermal processing.

8. Use of an ultra-pure natural mineral layered silicate having a proportion of more than 70% natural illite of the selected type, with a residue of fine particles, conditioned according to the method according to claim 1, as nano powder in the polymer industry.

9. Use of an ultra-pure natural mineral layered silicate with a proportion of more than 70% natural illite of the selected type with a residue of fine particles, conditioned according to the method according to claim 1, as nano filler material in the field of surface systems, such as for example ceramic glazes, varnishes, coatings etc

10. Use of an ultra-pure natural mineral layered silicate having a proportion of more than 70% natural illite of the selected type, with a residue of fine particles, conditioned according to the method according to claim 1, as reactive nano product for ceramic and for forming nano-structured ceramic structures.

## Revendications

1. Procédé de conditionnement mécanique d'un phyllosilicate minéral naturel à haute pureté, avec le principal composant d'illite du type choisi avec une plus haute fraction de 70%, excluant un prétraitement thermique, une destruction de structures cristallines et / ou des processus chimiques ou de synthèse, dans une plage de finesse nanométrique de 100 à 600 nm, et dans lequel le conditionnement mécanique est entrepris en ce que :
a) la matière du type choisi en tant que produit minéral de la plus haute pureté est pré-broyée mécaniquement, avec conservation de la composition naturelle d'origine, aux niveaux chimique et minéralogique,
b) les particules de phyllosilicate agglutinées sont soumises à une désagglomération, en ce que les agglomérats bruts sont exposés à une haute accélération et mis en turbulence à l'aide d'importantes masses d'air,
c) les agglomérats sont projetés les uns sur les autres et contre des surfaces d'impact, et désagrégés jusqu'à ce que l'on obtienne des cristallites primaires d'un degré de finesse de moins d'environ 300 nm,
d) les particules de silicate désagglomérées sont soutirées par tamisage fin en aval, et
e) les particules non complètement désagglomérées sont réintroduites dans le processus de désagglomération et les cristaux primaires désagglomérés sont soutirés et, pour le conditionnement, la composition naturelle du produit est conservée au niveau chimique et minéralogique, les particules de phyllosilicate ne sont pas soumises à un broyage détruisant la structure cristalline, et les cristaux de phyllosilicate demeurent intacts en ce qui concerne leur forme et leur structure.

2. Procédé suivant la revendication 1, **caractérisé en ce que** le "pré-broyage" se fait à l'aide de dispositifs mécaniques conventionnels, par exemple un broyeur à cylindres, le tamisage fin au moyen de séparateurs à air à hautes performances avec des roues de séparation spéciales, et / ou la désagglomération est entreprise à l'aide de machines de traitement en soi connues, qui exercent sur les agglomérats un effet d'impact.

3. Procédé suivant l'une quelconque des revendications 1 ou 2, **caractérisé en ce que** le degré de désagglomération est augmenté par une décharge ciblée des fines, de préférence **en ce que**, dans les agrégats de désagglomération, on prend des mesures destinées à réaliser un plus long temps de séjour et / ou un plus grand effet d'impact.

4. Procédé suivant la revendication 1, **caractérisé en ce que**, pour le conditionnement, la composition naturelle du produit est maintenue aux niveaux chimique et minéralogique, que les particules de phyllosilicate ne sont exposées à aucun broyage détruisant la structure cristalline et que les cristallites de phyllosilicate demeurent intactes quant à leur forme et leur structure, et que la matière n'est exposée à aucun traitement chimique ni prétraitement thermique.

5. Procédé suivant l'une quelconque des revendications 1 à 4, **caractérisé en ce que** l'on met en oeuvre, pour la désagglomération de la matière, des machines de traitement sous forme de broyeurs à plateaux circulaires avec couronnes dentées, **en ce que** les espaces intermédiaires entre la cannelure de la couronne dentée sont configurés en fines chambres pour la mise en turbulence à de grandes vitesses de rotation et un grand effet d'impact, et **en ce que** le "pré-broyage" se fait à l'aide de broyeurs à cylindres et le tamisage fin à l'aide de séparateurs à air à hautes performances.

6. Produit minéral à utiliser en tant que matière de remplissage active, par exemple dans l'industrie des polymères ou l'industrie céramique, préparé par un procédé suivant la revendication 1, **caractérisé par** la combinaison des caractéristiques suivantes :
a) produit minéral à base de phyllosilicate d'aluminium du type choisi,
b) structure cristalline tricouche, sans manipulation de sa structure de base,
c) composant principal d'illite minérale du type choisi, en une fraction de plus de 70%,
d) état d'agrégat solide ou pulvérulent,
e) D₉₅ < 3000 nm,
f) D₅₀ < 500 nm,
g) réactivité au niveau de l'échange d'ions,
h) déversable et fluide sans grand dégagement de poussière,
i) pas de tendance marquée à la réagglomération,
j) capacité de mouillage vis-à-vis de l'eau,
k) faculté praticable d'homogénéisation et adéquation à une utilisation sûre,
l) pas de tendance à l'hygroscopie.

7. Utilisation d'un phyllosilicate minéral naturel à haute pureté, présentant une fraction de plus de 70% d'illite naturelle du type choisi, avec un reste de fines particules, conditionné par le procédé suivant la revendication 1, sous forme de nanopoudre possédant les propriétés suivantes :
a) il est mécaniquement "pré-broyé" en tant que produit minéral de très haute pureté, en conservant la composition naturelle d'origine aux points de vue chimique et minéralogique,
b) les particules de phyllosilicate agglomérées sont désagglomérées par suite d'une forte accélération des agglomérats bruts et d'une mise en turbulence au moyen de grandes masses d'air,
c) les agglomérats sont désagrégés par effet d'impact mécanique les uns sur les autres et sur des surfaces d'impact, jusqu'à obtention des cristallites primaires d'un degré de finesse de moins d'environ 300 nm,
d) les particules de phyllosilicate désagglomérées sont soutirées par tamisage fin en aval,
e) pour le conditionnement, la composition naturelle du produit est conservée aux niveaux chimique et minéralogique,
f) la structure cristalline des particules de phyllosilicate est conservée et n'est pas influencée quant à sa forme et sa structure, et
g) la matière est exclusivement traitée par conditionnement mécanique, sans processus de traitement chimique ni thermique.

8. Utilisation d'un phyllosilicate minéral naturel à haute pureté, avec une fraction de plus de 70% d'illite naturelle du type choisi, avec un reste de fines, conditionné par le procédé suivant la revendication 1 et sous forme de nanopoudre, dans l'industrie des polymères.

9. Utilisation d'un phyllosilicate minéral naturel à haute pureté avec une fraction de plus de 70% d'illite naturelle du type choisi, avec un reste de fines, conditionné par le procédé suivant la revendication 1, en tant que nanocharge dans le domaine de systèmes de surface, comme par exemple des glasures céramiques, des vernis, des revêtements etc.

10. Utilisation d'un phyllosilicate minéral naturel à haute pureté avec une fraction de plus de 70% d'illite naturelle du type choisi, avec un reste de fines, conditionné par le procédé suivant la revendication 1, en tant que nanoproduit réactif pour les céramiques et pour la formation de corps de calcin céramiques à nanostructure.
